# FASCICULE DE BREVET EUROPEEN

(11) **EP 0 664 403 B1**
(45) Date de publication et mention de la délivrance du brevet: **21.10.1998**
(21) Numéro de dépôt: 94402935.4
(22) Date de dépôt: 19.12.1994
(51) Int. Cl.: F16B 5/00

(54) **Dispositif de maintien par emboîtement d'un revêtement sur un support et son application notamment aux véhicules**
Vorrichtung zum Aufbringen einer Bekleidung auf einen Träger durch Verfalzung und ihre Anwendung in Kraftfahrzeugen
Device for fastening a lining by interlocking it with a support and its application especially to vehicles

(30) Priorité: 23.12.1993 FR 9315600
(43) Date de publication de la demande: 26.07.1995
(73) Titulaire: CESA COMPAGNIE EUROPEENNE DE SIEGES POUR AUTOMOBILES, 92307 Levallois-Perret Cédex (FR)
(72) Inventeur: Hircq, Alain, F-45200 Montargis (FR); Lapret, Marc, F-45230 Sainte Genevieve des Bois (FR); Rota, Jean Michel, F-45290 Nogent sur Vernisson (FR)
(74) Mandataire: Polus, Camille

(56) Documents cités:
- EP-A- 0 033 186
- GB-A- 691 394

## Description

La présente invention concerne le maintien ou la fixation d'un revêtement sur un support ou sur une paroi qui ne fait pas appel à une colle ou similaire mais qui assure cette fixation ou maintien par simple emboîtement.

Dans de nombreux secteurs techniques, il est nécessaire d'appliquer un revêtement sur ou à la surface d'un support ou d'une paroi. C'est par exemple le cas dans l'industrie automobile pour "habiller" ou garnir d'un revêtement la partie postérieure d'un dossier de siège ou de banquette notamment arrière ou le panneau intérieur d'une porte d'un véhicule.

La fixation d'un tel revêtement qui se présente souvent sous la forme d'une moquette ou similaire ou d'un matériau textile ou analogue, est faite à l'aide d'une colle. L'utilisation de colle n'est pas sans présenter de dangers par les vapeurs le plus souvent nocives ou toxiques qu'elle dégage lors de son enduction ou qu'elle relargue ensuite, de même que par les substances produites lors de sa décomposition par la chaleur.

Lorsqu'on souhaite maintenir ou fixer un revêtement de cette nature sur une paroi sans faire appel à une colle, un certain nombre de difficultés apparaissent en particulier au voisinage des ouvertures ou des découpes qui sont souvent présentes, par exemple sur les panneaux de porte avant qui reçoivent des haut-parleurs d'une installation radiophonique ou similaire, ou bien sont parfois pratiquées dans les dossiers des sièges ou banquettes arrière pour ménager une trappe "à ski" ou autres objets de grande longueur.

L'invention concerne une technique élégante et relativement bon marché pour assurer la finition ou l'habillage d'un support à l'aide d'un revêtement, qui ne présente pas les inconvénients de la technique antérieure.

Si l'on considère le cas de la banquette ou du siège arrière d'un véhicule dans le dossier duquel est ménagée une trappe à ski, il est courant de ne pas laisser apparente la paroi de la partie postérieure en tôle ou autre matériau du dossier mais au contraire de la revêtir par exemple d'une moquette ou analogue afin d'obtenir une belle présentation et un aspect agréable. Si l'on doit éviter d'utiliser une colle, il faut accrocher la moquette à la périphérie du dossier à l'aide par exemple de profilés incorporés à la tôle de la paroi de la partie postérieure, de picots ou similaires et il faut aussi munir l'orifice de la trappe à ski de profilés, moulures ou joncs ou analogues pour solidariser la moquette et le support. Ceci conduit à l'utilisation d'accessoires relativement coûteux en eux-mêmes et nécessitant des opérations supplémentaires de pose qui grèvent d'autant les coûts de production.

GB-A-691 394 décrit un dispositif du type comportant un revêtement maintenu sur un support présentant une surface délimitée par un bord à contour continu, le revêtement présentant une bordure à contour continu similaire à celui du bord de la surface du support, le périmètre du bord du support et celui de la bordure du revêtement étant différents de manière à former sur le revêtement une marge qui est apte à déborder de la surface du support.

L'invention a pour objet un dispositif du type précité, caractérisé en ce qu'il comprend un cadre d'emboîtement du revêtement sur le support qui est fait en un matériau flexible et relativement élastique et forme une bande délimitée par des arêtes opposées qui ménagent entre elles deux plages contiguës dont l'une de recouvrement est destinée à être placée localement contre la surface du support et dont l'autre de fixation est destinée à être appliquée localement contre la marge du revêtement de manière que l'arête de la plage de fixation soit en correspondance avec la bordure du revêtement et l'arête de la plage de recouvrement soit en retrait du bord du support, et en ce qu'il comprend une jonction permanente pour réunir cadre et revêtement qui est faite à proximité de la bordure du revêtement et de l'arête de la plage de fixation.

D'autres caractéristiques de l'invention apparaîtront à la lecture de la description et des revendications qui suivent ainsi qu'à l'examen du dessin annexé, donné seulement à titre d'exemple, où :

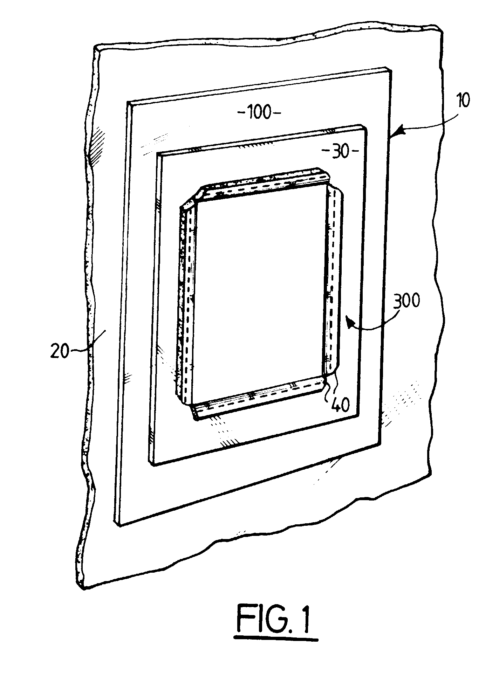

- la Figure 1 est une vue perspective partielle schématique d'un mode de réalisation d'un dispositif selon l'invention illustré dans son application spécifique à l'habillage d'un panneau de véhicule automobile; et
- les Figures 2 et 3 sont des coupes transversales de deux variantes d'exécution du mode de réalisation illustré sur la Figure 1 à une échelle agrandie.

Les processus d'habillage ou de garnissage de parois ou supports à l'aide d'un revêtement et en particulier des panneaux de véhicule automobile, étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif selon l'invention avant d'en exposer la fabrication au besoin, et la mise en oeuvre.

Dans ce qui suit, on décrira un mode de réalisation d'un dispositif selon l'invention dans son application particulière à l'habillage d'un panneau transpercé d'une ouverture tel que par exemple une trappe à ski, de la partie postérieure d'un dossier de siège ou de banquette arrière d'un véhicule automobile terrestre. Il est clair que l'invention n'est pas limitée à cette application particulière.

Comme on le voit, un dispositif selon l'invention qui est destiné à maintenir par emboîtement sur un support 10 un revêtement 20, comprend essentiellement un cadre 30 et une jonction 40.

Le support 10, par exemple une plaque plane présente une surface 100 dans laquelle est, s'il a lieu, découpée une ouverture 101 qui la transperce. La surface 100 est délimitée par un bord 11 à contour continu et par exemple fermé.

Le revêtement 20 présente une marge 200 délimitée par une bordure 21 à contour continu et par exemple fermé, similaire à celui du bord 11.

Pour les raisons que l'on comprendra par la suite, il est question ici d'un bord 11 intérieur entourant l'ouverture 101, mais il est clair qu'il peut s'agir aussi d'un bord extérieur périphérique délimitant la surface du support.

Comme on peut le remarquer, le périmètre du bord 11 délimitant la surface du support est différent du périmètre de la bordure délimitant la marge du revêtement. Dans le cas d'un bord intérieur, le périmètre de ce dernier est plus grand que le périmètre de la bordure. Inversement, dans le cas d'un bord extérieur, le périmètre de ce dernier est plus petit que le périmètre de la bordure. Dans tous les cas, on voit que de la sorte lorsque revêtement 20 et support 10 sont appliqués l'un contre l'autre, la marge 200 déborde de la surface 100.

Le cadre 30 est fait en un matériau flexible qui présente une certaine élasticité et s'il y a lieu une certaine rigidité. Comme on le voit, ce cadre forme une bande 300 continue d'un seul tenant comme illustré, ou faite de tronçons, qui est délimitée par des arêtes 31 opposées. Ces arêtes opposées 31 ménagent entre elles deux plages 301 et 302 contiguës. La plage 301 dite de recouvrement est délimitée par l'arête 311 et est destinée à être appliquée localement contre la surface 100 du support 10. La plage 302 dite de fixation est bordée par l'arête 312 et est destinée à être placée localement contre la marge 200 du revêtement 20. Comme cela résulte en particulier de l'examen des figures du dessin, on fait en sorte que l'arête 312 de la plage de fixation 302 soit en correspondance avec la bordure 21 du revêtement 20, et on fait aussi en sorte que l'arête 311 de la plage de recouvrement 301 soit en retrait par rapport au bord 11 du support 10, c'est-à-dire en regard de la surface 100 de ce dernier.

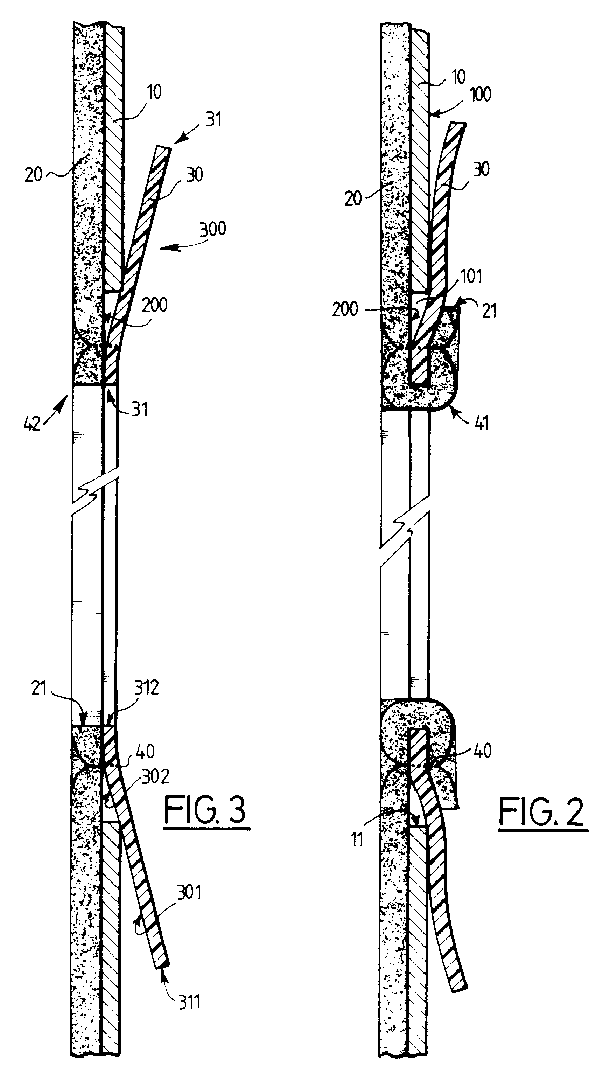

La jonction 40 permanente réunit le cadre 30 et le revêtement 20, et est faite à proximité de la bordure 21 du revêtement 20 et de l'arête 312 de la plage de fixation 302. Cette jonction ou assemblage est fait de préférence à l'aide d'une piqûre qui forme un ourlet qui enserre l'arête de la plage de fixation du cadre comme illustré sur la Figure 2. Selon une autre variante d'exécution, la piqûre ou similaire forme un faux ourlet cousu en lisière de l'arête de la plage de fixation du cadre comme illustré sur la Figure 3. Il est clair que selon la nature des matériaux dont sont faits le cadre et le revêtement, la jonction peut être faite par une soudure ou similaire par exemple par ultra-sons ou analogues.

Le cadre est fait à partir d'une feuille ou d'une planche en carton ou en matière synthétique de consistance appropriée de manière à avoir une certaine rigidité et aussi une certaine flexibilité avec une relative élasticité. Le cadre qu'il soit d'un seul tenant ou fait de tronçons, est par exemple découpé à l'aide d'un poinçon et d'une matrice de manière à y ménager une ouverture un peu plus petite que celle de l'ouverture du support pour satisfaire aux conditions précédemment indiquées. La marge ainsi obtenue est de l'ordre de 3 à 4 mm tout autour pour l'exemple illustré.

Le revêtement, par exemple une moquette ou un textile ou similaire, est aussi découpé selon des techniques traditionnelles de manière à y dégager un orifice dont la taille est pratiquement égale à celle de l'ouverture découpée dans le cadre si l'on n'utilise pas d'ourlet comme illustré sur la Figure 3, ou bien d'une taille un peu plus petite si l'on souhaite confectionner un ourlet comme illustré sur la Figure 2.

Ces découpages faits et après mise en registre du cadre et du revêtement, il suffit d'assurer la jonction par exemple par piqûre, comme illustré clairement sur les figures du dessin.

Pour assujettir le revêtement ainsi muni de son cadre, il suffit de présenter l'ensemble et de le déformer momentanément pour faire passer le cadre au travers de l'ouverture du support. Les contours de l'ouverture prennent alors l'allure de lignes courbes par exemple tracées sur un hyperboloïde de révolution ou similaire. On fait alors passer le cadre dans l'ouverture du support puis on libère le cadre. Le cadre de par son élasticité inhérente tend à reprendre spontanément sa relative planéité et assure ainsi un maintien par simple emboîtement du support retenu prisonnier entre le cadre et le revêtement comme cela apparaît clairement sur les Figures 2 et 3 notamment.

On notera que grâce à l'invention, il est possible d'opérer "en aveugle" puisqu'il suffit qu'une seule face apparente du support à revêtir soit accessible directement.

On a décrit le cas particulier du maintien sur un bord intérieur du support. Il est clair que la même technique vaut pour un bord extérieur en procédant aux transpositions nécessaires convenables.

Si le bord de la surface du support est vif et tranchant, il est au préalable ébavuré ou ébarbé, ou bien il est recouvert d'une baguette ou réglette ou similaire de préférence à section droite en U afin d'assurer une protection.

On voit donc que le dispositif selon l'invention permet d'obtenir une finition au voisinage d'un bord de la surface d'un support qui est habillé ou garni à l'aide d'un revêtement, qui est particulièrement simple, esthétique et peu onéreuse sans qu'il ait été nécessaire d'utiliser une colle ou des artifices de finition.

On observera que l'aspect final est très satisfaisant pour l'oeil puisque dans un cas seul un ourlet est visible et que dans l'autre cas, un faux ourlet laisse apparaître la tranche du revêtement et celle du cadre, ce qui n'est pas un inconvénient en soi car les matériaux du cadre et du revêtement peuvent être teintés dans la masse pour avoir la même nuance de couleur ou bien on peut utiliser des effets de couleur pour obtenir des aspects esthétiques particuliers.

Ce qui précède montre l'intérêt de l'invention, les avantages qu'elle procure et les particularités qui la caractérisent.

## Revendications

1. Dispositif du type comportant un revêtement (20) maintenu sur un support (10) présentant une surface (100) délimitée par un bord (11) à contour continu, le revêtement (20) présentant une bordure (21) à contour continu similaire à celui du bord (11) de la surface (100) du support (10), le périmètre du bord (11) du support (10) et celui de la bordure (21) du revêtement (20) étant différents de manière à former sur le revêtement (20) une marge (200) qui est apte à déborder de la surface (100) du support (10), caractérisé en ce qu'il comprend un cadre (30) d'emboîtement du revêtement (20) sur le support qui est fait en un matériau flexible et relativement élastique et forme une bande (300) délimitée par des arêtes (31) opposées qui ménagent entre elles deux plages (301, 302) contiguës dont l'une (301) de recouvrement est destinée à être placée localement contre la surface (100) du support (10) et dont l'autre (302) de fixation est destinée à être appliquée localement contre la marge (200) du revêtement de manière que l'arête (312) de la plage (302) de fixation soit en correspondance avec la bordure (21) du revêtement (20) et l'arête (311) de la plage (301) de recouvrement soit en retrait du bord (11) du support (10), et en ce qu'il comprend une jonction (40) permanente pour réunir cadre (30) et revêtement (20) qui est faite à proximité de la bordure (21) du revêtement (20) et de l'arête (312) de la plage (302) de fixation.

2. Dispositif selon la revendication 1, caractérisé en ce que la jonction (40) est une piqûre.

3. Dispositif selon la revendication 1, caractérisé en ce que la jonction (40) est une soudure.

4. Dispositif selon la revendication 1, 2 ou 3, caractérisé en ce que la bordure du revêtement forme un ourlet (41) qui enserre l'arête (312) de la plage (302) de fixation du cadre.

5. Dispositif selon la revendication 1, 2 ou 3, caractérisé en ce que la bordure du revêtement est jointe en faux-ourlet en lisière avec l'arête (312) de la plage (302) de fixation du cadre.

6. Dispositif selon l'une quelconque des revendications 1 à 5, caractérisé en ce que le cadre (30) est d'un seul tenant.

7. Dispositif selon l'une quelconque des revendications 1 à 6, caractérisé en ce que le cadre (30) est en plusieurs tronçons.

8. Dispositif selon l'une quelconque des revendications 1 à 7, caractérisé en ce que le support (10) est une plaque et en ce que le revêtement (20) est un matériau textile.

9. Dispositif selon l'une quelconque des revendications 1 à 8, caractérisé en ce que le bord (11) du support (10) est un bord périphérique extérieur.

10. Dispositif selon l'une quelconque des revendications 1 à 8, caractérisé en ce que le bord (11) du support (10) est un bord intérieur entourant une ouverture (101).

11. Application d'un dispositif selon l'une quelconque des revendications 1 à 10 notamment à l'habillage de parties de véhicules automobiles terrestres.

## Patentansprüche

1. Vorrichtung einer Art mit einer Verkleidung (20), welche an einem Träger (10) gehalten wird, der eine durch einen Rand (11) mit kontinuierlicher Kontur begrenzte Oberfläche (100) aufweist, wobei die Verkleidung (20) eine Umrandung (21) mit kontinuierlicher Kontur ähnlich derjenigen des Randes (11) der Oberfläche (100) des Trägers (10) aufweist, wobei der Umfang des Randes (11) des Trägers (10) und derjenige der Umrandung (21) der Verkleidung (20) in einer Weise verschieden sind, daß an der Verkleidung (20) ein Randstreifen (200) verbleibt, der für ein Vorstehen gegenüber der Oberfläche (100) des Trägers (10) eingerichtet ist, dadurch gekennzeichnet, daß sie einen Rahmen (30) für die Einschachtelung der Verkleidung (20) am Träger aufweist, der aus einem flexiblen und verhältnismäßig elastischen Material besteht und ein Band (300) ausbildet, welches durch entgegengesetzte Kanten (31) begrenzt ist, die zwischen sich zwei aneinandergrenzende Bereiche (301, 302) ausbilden, von denen der eine (301), zur Abdeckung, für ein örtliches Anordnen gegen die Oberfläche (100) des Trägers (10) bestimmt ist, und von denen der andere (302), zur Befestigung, für ein örtliches Anlegen gegen den Randstreifen (200) der Verkleidung bestimmt ist, derart, daß die Kante (312) des Befestigungsbereichs (302) in Entsprechung zur Umrandung (21) der Verkleidung (20) und die Kante (311) des Abdeckbereichs (301) in Zurücksetzung gegenüber dem Rand (11) des Trägers (10) ist, und daß sie eine Permanentverbindung (40) zur Vereinigung von Rahmen (30) und Verkleidung (20) aufweist, die in der Nähe der Umrandung (21) der Verkleidung (20) und der Kante (312) des Befestigungsbereichs (302) ausgeführt ist.

2. Vorrichtung nach Anspruch 1, dadurch gekennzeichnet, daß die Verbindung (40) eine Heftung ist.

3. Vorrichtung nach Anspruch 1, dadurch gekennzeichnet, daß die Verbindung (40) eine Verschweißung ist.

4. Vorrichtung nach Anspruch 1, 2 oder 3, dadurch gekennzeichnet, daß die Umrandung der Verkleidung einen Saum (41) bildet, der die Kante (312) des Befestigungsbereichs (302) des Rahmens umschließt.

5. Vorrichtung nach Anspruch 1, 2 oder 3, dadurch gekennzeichnet, daß die Umrandung der Verkleidung als Ansatz als Saum mit der Kante (312) des Befestigungsbereichs (302) des Rahmens verbunden ist.

6. Vorrichtung nach irgendeinem der Ansprüche 1 bis 5, dadurch gekennzeichnet, daß der Rahmen (30) aus einem Stück ist.

7. Vorrichtung nach irgendeinem der Ansprüche 1 bis 6, dadurch gekennzeichnet, daß der Rahmen (30) aus mehreren Abschnitten besteht.

8. Vorrichtung nach irgendeinem der Ansprüche 1 bis 7, dadurch gekennzeichnet, daß der Träger (10) eine Platte ist und daß die Verkleidung (20) ein textiles Material ist.

9. Vorrichtung nach irgendeinem der Ansprüche 1 bis 8, dadurch gekennzeichnet, daß der Rand (11) des Trägers (10) ein äußerer Umfangsrand ist.

10. Vorrichtung nach irgendeinem der Ansprüche 1 bis 8, dadurch gekennzeichnet, daß der Rand (11) des Trägers (10) ein eine Öffnung (101) umgebender innerer Rand ist.

11. Verwendung einer Vorrichtung nach irgendeinem der Ansprüche 1 bis 10, insbesondere zur Verkleidung von Teilen von Land-Kraftfahrzeugen.

## Claims

1. Device of the type comprising a covering (20) held on a support (10) having a surface (100) delimited by an edge (11) having a continuous contour, the covering (20) having a border (21) having a continuous contour similar to that of the edge (11) of the surface (100) of the support (10), the perimeter of the edge (11) of the support (10) and that of the border (21) of the covering (20) being different in such a way as to form on the covering (20) a margin (200) which is capable of overlapping the surface (100) of the support (10), characterised in that it comprises a frame (30) for fitting the covering (20) on the support which is made of flexible and relatively elastic material and forms a band (300) delimited by opposite edges (31) which form between then two contiguous areas (301, 302) one of which (301), an overlap one, is intended to be placed locally against the surface (100) of the support (10) and the other of which (302), the fixing one, is intended to he applied locally against the margin (200) of the covering in such a way that the edge (312) of the fixing area (302) is in alignment with the border (21) of the covering (20) and the edge (311) of the overlap area (301) is set back from the edge (11) of the support (101) and in that it comprises a permanent join (40) for joining the frame (30) and the covering (20) which is made in the vicinity of the border (21) of the covering (20) and of the edge (312) of the fixing area (302).

2. Device according to Claim 1, characterised in that the join (40) is a stitching.

3. Device according to Claim 1, characterised in that the join (40) is a weld.

4. Device according to Claim 1, 2 or 3, characterised in that the border of the covering forms a hem (41) which encloses the edge (312) of the fixing area (302) of the frame.

5. Device according to Claim 1, 2 or 3, characterised in that the border of the covering is joined as a false hem edge with edge (312) of the fixing area (302) of the frame.

6. Device according to any one of Claims 1 to 5, characterised in that the frame (30) is in one piece.

7. Device according to any one of Claims 1 to 6, characterised in that the frame (30) is in several sections.

8. Device according to any one of Claims 1 to 7, characterised in that the support (10) is a plate and in that the covering (20) is a textile material.

9. Device according to any one of Claims 1 to 8, characterised in that the edge (11) of the support (10) is an outer peripheral edge.

10. Device according to any one of Claims 1 to 8, characterised in that the edge (11) of the support (10) is an inner edge surrounding an opening (101).

11. Application of a device according to any one of Claims 1 to 10 in particular to the upholstering of parts of terrestrial motor vehicles.
